# EUROPEAN PATENT SPECIFICATION

(11) **EP 4 166 259 B1**
(45) Date of publication and mention of the grant of the patent: **24.04.2024**
(21) Application number: 21202680.1
(22) Date of filing: 14.10.2021
(51) Int. Cl.: B22F 1/052, B22F 10/28, B33Y 80/00, B22F 10/64, B33Y 40/20, B33Y 10/00, B22F 10/14, C22C 38/00, C22C 38/02, C22C 38/04, C22C 38/44, C22C 38/50, C22C 38/52, B22F 10/25, C22C 38/06, B33Y 70/00, C21D 6/00, C21D 6/02

(54) **METAL POWDER FOR ADDITIVE MANUFACTURING**
METALLPULVER FÜR DIE GENERATIVE FERTIGUNG
POUDRE MÉTALLIQUE POUR FABRICATION ADDITIVE

(43) Date of publication of application: 19.04.2023
(73) Proprietor: Sandvik Machining Solutions AB, 811 81 Sandviken (SE)
(72) Inventor: DEIRMINA, Faraz, 811 30 Sandviken (SE); MAGNUSSON, Hans, 164 07 Kista (SE)
(74) Representative: Sandvik

(56) References cited:
- WO-A1-2019/121879
- JP-A- 2000 052 086
- US-A- 4 443 254
- Q.SABY, J-Y BUFFIERE, E-MAIRE, T.JOFFRE, J.BAJOLET, P.VIKNER, X.BOULNAT: "Cobalt-Free Steel Alternatives to Maraging Steel for Parts Made by Laser Powder Bed Fusion", EURO PM2020 VIRTUAL CONGRESS, EUROPEAN POWDER METALLURGY ASSOCIATION, 1 AVENUE DU GÉNÉRAL DE GAULLE, 60500 CHANTILLY, FRANCE, 5 October 2020 (2020-10-05), XP040713036, ISBN: 978-1-899072-51-4
- TURK CHRISTOPH ET AL: "Advances in Maraging Steels for Additive Manufacturing", BHM. BERG UND HUETTENMAENNISCHE MONATSHEFTE, SPRINGER, VIENNA, AU, vol. 164, no. 3, 18 February 2019 (2019-02-18), pages 112-116, XP036735323, ISSN: 0005-8912, DOI: 10.1007/S00501-019-0835-Z [retrieved on 2019-02-18]

## Description

### Technical field

The present invention relates to a metal powder for additive manufacturing, to the use of the metal powder for additive manufacturing, and to a process for producing an object by additive manufacturing.

### Background

Additive manufacturing (AM), or three-dimensional (3D) printing, is a promising manufacturing technique that makes it possible to produce complex structures and bodies that cannot easily be achieved via conventional manufacturing processes.

In many additive manufacturing techniques, in particular laser powder bed fusion (L-PBF), a powder is subjected to melting followed by rapid solidification (cooling rate 10⁴-10⁶ K/s).

There is a constant need in the industry for finding new materials for additive manufacturing.

Maraging steels are a weldable class of ultra-high strength martensitic steels which can be welded without preheating either in the annealed or heat-treated condition. Maraging steels are therefore employed as tool steels in the mold and die making industry, and for high-performance parts, e.g. in the aerospace industry.

Maraging steels are characterized by very low carbon content favouring dimensional stability, and the presence of substitutional alloying elements such as Mo, Ti, and Al which trigger age-hardening in Fe-Ni martensite by the precipitation of nanosized intermetallic particles (e.g., Ni₃Ti, Ni₃Mo, NiAl, and Fe₇Mo₆). The martensitic microstructure of maraging steels is achieved through high nickel content as compared to most tool steels achieving their martensitic microstructure through a relatively high amount of carbon in the alloy composition.

In Co containing maraging steels, Co increases the supersaturation of Mo in the matrix thus leading to enhanced precipitation kinetics. Co also reduces the stacking fault energy which retards dislocation movement in the matrix and increases the interaction energy between dislocations and interstitial atoms to reduce the brittleness at high strength levels. Furthermore, Co raises the martensite start (Ms) temperature enabling addition of higher amounts of substitutional alloying elements (e.g., Mo and Ti), without the risk of stabilizing residual austenite. Addition of Co to the Fe-18 Ni-Mo alloys increases the strength by up to 500 MPa.

Among conventional maraging grades, 18Ni300 steel with a nominal composition of 18.0 Ni-10.0 Co-5.0 Mo-0.7 Ti, Fe bal. (wt%), and achievable tensile strength (UTS) of ~2000 MPa is reported to be the most exploited commercial powder for additive manufacturing (AM), and in particular for the laser powder bed fusion (L-PBF) process. However, given the Co price fluctuations, some uncertainty associated with the supply sources, and the health issues related to Co usage, Co free alternatives to 18Ni300 are of great interest.

JP 2000 052086 A discloses a metal powder based on Fe and further comprising in one the examples in wt%, Ni 11.67, Cr 3.44, Mo 3.455 , Si 0.24, Mn 0.92, C 0.01 and impurities of P and S.

From a metallurgical viewpoint, developing an ultra-high strength low carbon maraging steel with acceptable toughness without using Co can be challenging. In addition to its effect on the Ms temperature and indirect strengthening, Co also enhances toughness at high strength levels. It has been reported that in Co free maraging steels strengthened by increased amounts of Ti or Al to compensate for the absence of the Co-Mo interactions, toughness drops even more sharply at high strength levels. Increased amounts of Ti, may also deteriorate toughness due to the formation of grain boundary titanium carbonitrides. In addition to the above mentioned aspects of Co free maraging system, the fast solidification, characteristic of, i.e., the L-PBF process, leads to the formation of a cellular/dendritic solidification structure with heavy microsegregation of alloying elements to the intercellular/dendritic regions as a result of the constitutional undercooling. This might lead to the chemical stabilization of retained austenite (RA) at the intercellular regions. A large volume fraction of RA necessitates the need for a high temperature homogenization treatment and/or solution annealing which adds cost to the whole AM process chain.

One of the challenges when producing martensitic steel objects using AM is to provide a body with comparable microstructure, i.e. porosity, a minimum of retained austenite etc., as conventionally produced steels in austenitized and quenched or in solution annealed condition.

There have been many attempts to find a suitable powder that is both easy to manufacture, has the appropriate characteristics for AM and which also results in a final product with good properties and quality. However, there still exists a need in the additive manufacturing industry today for improved powders.

### Summary

An object of the invention is to provide a powder for additive manufacturing, which at least partly provides the above-mentioned properties.

The invention is defined by the appended claims.

According to one aspect of the invention, this and other objects that will become apparent in the following are accomplished by a metal powder for additive manufacturing, comprising, in wt%,
Ni 9.0-12.0,
Cr 2.0-4.5,
Mo 3.5-4.5 and
Ti 0.1-1.0;
and, if present,
Si up to 0.5,
Mn up to 0.5,
AI up to 0.1,
Co up to 0.1,
N up to 0.05 and/or
C up to 0.07;
the balance being Fe and usual impurities.

The inventive powder has proven to be a highly promising powder for a plurality of additive manufacturing processes such as for instance Laser-Powder Bed Fusion (L-PBF), Electron Powder Bed Fusion (E-PBF), Direct Energy Deposition (DED) and Binder Jetting, particularly L-PBF. It has surprisingly been found that the metal powder, when used in additive manufacturing, is capable of producing an end product having a mainly martensitic microstructure comprising only a small volume fraction of retained austenite. The small volume fraction of retained austenite may be below 2 vol.%. The small volume fraction of retained austenite was found to be mainly, or only, located at the cellular boundaries as a consequence of heavy microsegregation of alloying elements. Retained austenite is known in the art to reduce the hardness of metal materials. The small volume fraction of retained austenite advantageously means that there is no need for, e.g., a homogenization or solution annealing treatment following the AM process, which heat treatments are commonly utilized for microstructural homogenization, removing segregation, dissolution of secondary phases and in the case of some maraging steels eliminating retained austenite. Expressed differently, the inventive powder delivers an essentially martensitic microstructure of an additively manufactured object which advantageously is suitable for direct aging without a need for prior homogenization or solution annealing, i.e. without a need for removing retained austenite. By avoiding a homogenization or annealing step, the time for producing a finished article with desirable properties may be decreased and thus also the manufacturing cost. Further, avoiding high temperature treatments may minimize the distortions (dimensional changes) associated with high temperature thermal treatments such as homogenization and annealing. It is understood that an additively manufactured object showing only small dimensional changes during e.g. heat treatment is preferred.

Aging, sometimes referred to as precipitation hardening, age hardening and particle hardening, is a heat treatment technique used to increase the yield strength of a malleable material. Aging produces fine particles of an impurity phase in the treated material as a result of temperature dependent solid solubility. Aging as a concept is known to the person skilled in the art. Herein, the term "direct aging" refers to aging conducted without any prior homogenization or annealing.

The powder according to the present invention resulted in a yield strength of 1706 MPa, a tensile strength of 1732 MPa and a hardness of up to 540 HV5 of a directly aged article made by L-PBF. An article made by the inventive powder and L-PBF shows a tensile elongation of ~10 % and an area reduction of 52 % after direct aging at 480 °C for 8 h.

In general, fast solidification (cooling rate of 10⁴-10⁶ K/s) of a Co free or almost Co free maraging system is expected to lead to heavy microsegregation of alloying elements to the inter-cellular/dendritic regions as a result of a constitutional undercooling. This commonly leads to the chemical stabilization of retained austenite at the intercellular regions. A large volume fraction of retained austenite necessitates the need for a homogenization and/or solution annealing. It has surprisingly been realized that a fast cooling of a melt comprising the inventive powder does advantageously not form a large volume fraction of retained austenite. The metal powder advantageously forms a martensitic matrix comprising less than 2 vol.% of retained austenite even after fast solidification of the powder. Thus, a step of homogenization or solution annealing may be avoided.

Thus, the inventive powder has proven promising for e.g. additive manufacture or repair of tool holders, and injection molding tools and dies.

Usual impurities may for example be O, S, P, or a combination thereof. Usual impurities may herein refer to commonly occurring impurities resulting from e.g. steel manufacturing or manufacturing of metal powders. It is understood that impurities may occur from other sources.

The inventive powder is Co free or almost Co free. This advantageously allows for a cost-consistent and user-friendly powder. Cost-consistent may herein be referred to as not greatly associated with or affected by cost fluctuations.

The metal powder for additive manufacturing may herein refer to a ready-to-print metal powder, i.e. that the metal powder is ready for use in an additive manufacturing process like binder jetting, directed energy deposition or powder bed fusion, such as laser beam powder bed fusion or electron beam powder bed fusion.

Ni promotes the formation of Fe-Ni martensite during cooling. At sufficiently high cooling rates, 5 to up to 10 wt% nickel is sufficient to achieve Fe-Ni martensite. By increasing the nickel content, the cooling rate necessary to form martensite reduces significantly. At about 10 wt% Ni a fully martensitic matrix is formed even with very slow cooling. Over 25 wt% nickel content lowers the martensite formation temperature below room temperature and thus promotes the formation of austenite, and also changes the morphology of martensite, which is not desirable. These limits can be changed/affected by the addition of interstitial alloying elements, and solubilizing temperature.

Mo forms intermetallic compounds with both Ni and Fe. The intermetallic compounds of Ni and Mo formed during the aging process, promote the hardness and/or strength of the material. Molybdenum also decreases the diffusion coefficients of certain alloying elements at the grain boundaries and thus slows down the grain boundary precipitation of second-phase particles during aging. This improves ductility and plasticity of the steel. However, Mo also tends to segregate during fast solidification, which at high amount, promotes the formation of retained austenite at the microsegregated regions.

Cr decreases the solubility of Ti and Mo in Fe-Ni martensite and thus promotes the aging kinetics by increasing the volume fraction and number density of Mo, and Ti containing intermetallic compounds. A too high amount of Cr promotes the stabilization of austenite. Cr levels of ~3 wt% mildly enhance the oxidation resistance. The addition of Cr to the current alloy promotes the precipitation of the Laves phase, and too high Cr contents may also result in the formation of the Sigma phase.

The Ti may be present to form intermetallic compounds, such as Ni₃Ti, for strengthening purposes. A too high amount of Ti in the powder results in a non-beneficial emergence of retained austenite as a result of microsegration. Ti may thus be considered a supplementary hardener.

Mn may be added for a more economical maraging steel within the powder atomization context, i.e. increase the processability in a powder atomization context. Excessive amounts of Mn deteriorate the ductility and decrease the tensile strength. Moreover, excessive amount of Mn promotes delta ferrite formation which is undesirable for at least part of the objectives described herein.

Si may be added for a more economical maraging steel in a powder atomization perspective, i.e. to increase processability in a powder atomization context.

Al may act as a deoxidizer and can be added up to 0.1 wt% to this steel, preferably below 0.05 wt%. Using a higher amount of Al, e.g. up to 2 wt%, may lead to formation of Ni-Al intermetallics during aging of the material. Al reduces ductility of the steel. Expressed differently, Al may increase resistance to oxidation and scaling.

N may be present in the powder as a result of nitrogen gas atomization and/or because of the presence of nitrogen in the atmosphere. N can form TiN precipitates which might negatively affect the fatigue properties of the steel. Therefore, in the present inventive context, the content of N is preferably, if present, not above 0.05 wt%.

Co increases the supersaturation of Mo in the matrix providing an increased amount of available Mo to take part in precipitation events. The main role of Co is in retarding the dislocation movement in the matrix and increasing the interaction energy between dislocations and interstitial atoms to reduce the brittleness at high strength levels. Moreover, Co raises the martensite start (Ms) temperature enabling addition of more age hardening alloying elements (e.g. Mo), without the risk of stabilizing residual austenite. A too low level of Co thus results in lower hardness after aging, while a too high level of Co in combination with lower than 15 wt.% Ni results in embrittlement.

The C amount is preferably kept low in the inventive powder, such as, if present, up to 0.07 wt%.

Preferably, the content of (Cr + Mo + Ti) is

| | |
|---|---|
| when 9.0 ≤ Ni ≤ 10.0: | 7.2 ≤ (Cr + Mo + Ti) ≤ 8.9; |
| when 10.0 < Ni ≤ 11.0: | 6.5 ≤ (Cr + Mo + Ti) ≤ 8.2; |
| when 11.0 < Ni ≤ 12.0: | 5.6 ≤ (Cr + Mo + Ti) ≤ 7.5 |

(all numerical values in wt%).

More preferably, the powder comprises, in wt%,

| | |
|---|---|
| Ni | 9.0-10.0, |
| Cr | 3.0-3.5, |
| Mo | 4.0-4.5 and |
| Ti | 0.7-0.9; |

and, if present,

| | |
|---|---|
| Si | up to 0.4, |
| Mn | up to 0.4, |
| Al | up to 0.05, |
| Co | up to 0.1, |
| N | up to 0.05 and/or |
| C | up to 0.03; |

the balance being Fe and usual impurities

Most preferably, the powder comprises, in wt%,

| | |
|---|---|
| Ni | 9.0-10.0, |
| Cr | 3.0-3.5, |
| Mo | 4.0-4.5, |
| Ti | 0.7-0.9, |
| Si | 0.2-0.4 and |
| Mn | 0.2-0.4; |

and, if present,

| | |
|---|---|
| Al | up to 0.05, |
| Co | up to 0.1, |
| N | up to 0.05 and/or |
| C | up to 0.03; |

the balance being Fe and usual impurities.

Si and Mn may be present in the powder because of their advantageous properties of increased processability when forming a powder. A too high amount of Si and Mn may lead to an increased and undesirable plasticity and ductility.

The comprised elements of the metal powder may be present as an alloy. It is understood that a powder comprises a plurality of particles. Herein, the phrase "the comprised elements are present as an alloy" refers to that the comprised elements are present as a substantially homogenous mixture in each of the particles of the powder. Expressed differently, the comprised elements when present as an alloy are distributed evenly among the particles of the powder. Thus, each particle of the powder may be considered to comprise substantially the same ratio of the comprised elements. This may positively effect the properties of an additively manufactured product using the inventive powder. Thus, when the comprised elements are present as an alloy, an improved homogeneity in the product produced by additive manufacturing may be achieved. The metal powder may be a maraging steel powder.

Alternatively, the comprised elements may be distributed in essentially any way throughout the particles of the powder. Thus, the powder may be a powder mixture. The powder mixture may comprise a first powder comprising a first element, a second powder comprising a second element etc. The powder mixture may comprise a one or more powders comprising single elements, and one or more powders being alloys of more than one element.

The particles of the powder or powder mixture may be sieved and blended from one or more gas atomization processes.

The particles of the powder may have a rounded shape or a substantially spherical shape.

At least 90 wt% of the powder may have a particle size determined by sieving of lower than 500 µm, preferably of lower than 200 µm. The most suitable range for the particle size, distribution range and/or mean size is dependent on the type of manufacturing technique used.

In one embodiment, at least 90 wt% of the powder may have a particle size of lower than 45 µm, such as lower than 38 µm, such as lower than 32 µm. This embodiment is suitable for binder jetting techniques.

In one embodiment, at most 10 wt% of the powder has a particle size of lower than 15 µm and at least 90 wt% of the powder has a particle size of lower than 53 µm. Preferably, 10 wt% of the powder particles have a diameter lower than 15 µm and 90 wt% of the particles have a diameter lower than 45 µm. Alternatively, 10 wt% of the powder particles may have a diameter lower than 20 µm and 90 wt% of the particles may have a diameter lower than 53 µm. The powder may have a distribution range of 10-60 µm. The mean size of the powder particles may be in the range of 25-50 µm. This embodiment is suitable for L-PBF techniques.

In one embodiment, at most 10 wt% of the powder has a particle size of lower than 45 µm and at least 90 wt% of the powder has a particle size of lower than 106 µm. This embodiment is suitable for E-PBF techniques.

In one embodiment, at most 10 wt% of the powder has a particle size of lower than 53 µm and at least 90 wt% of the powder has a particle size of lower than 150 µm. Preferably,10 wt% of the powder particles have a diameter lower than 45 µm and 90 wt% of the particles have a diameter lower than 90 µm. This embodiment is suitable for Direct Energy Deposition techniques.

According to another aspect of the invention there is provided a use of a powder as described herein for additive manufacturing. This aspect may generally present the same or corresponding advantages as the former aspect. The additive manufacturing may be binder jetting, directed energy deposition or powder bed fusion, such as laser beam powder bed fusion or electron beam powder bed fusion, preferably powder bed fusion, more preferably laser beam powder bed fusion. Preferably, the additive manufacturing comprises melting of the metal powder and rapid solidification of the melt, such as in L-PBF.

According to a further aspect of the invention there is provided a process for producing an object by additive manufacturing, comprising building an object by iteratively
- melting particles of a metal powder as described herein and
- solidifying the melt,
   and subsequently
- aging the built object without any preceding solution annealing thereof.

This aspect may generally present the same or corresponding advantages as the former aspects. It is understood that aging of the built object may be conducted without any preceding heat treatment, such as homogenization or solution annealing. However, a preceding heat treatment, such as homogenization or solution annealing, may alternatively be performed prior to aging of the built object.

After solidification, the built object has a substantially martensitic microstructure with a content of retained austenite below 2 vol.%. Thus, the built object may be subsequently aged without any preceding homogenization or solution annealing.

It is understood that the melting and solidifying steps may be iterated or repeated as is known in the field of AM so as to produce an object of a desired shape.

Homogenization is a heat treatment process generally conducted at, e.g., 950-1100 °C and commonly used during metal manufacturing. Homogenization is conducted so as to dissolve precipitates in a material and transform the material into a single-phase structure.

Solution annealing is a heat treatment process generally conducted at, e.g., 800-900 °C and a common process in metal manufacturing. Solution annealing is conducted so as do remove chemical inhomogeneities in heavy alloy steel by inducing diffusion of alloying materials.

Thus, since the building process results in an as-built object having an essentially martensitic microstructure with only a small amount of retained austenite, i.e. substantially without unwanted precipitates, homogenization of or annealing the as-built object is not necessary.

The aging process triggers the precipitation of intermetallic phases such as NisTi and NisMo when Ti and Mo respectively are present in the powder. This advantageously increases the strength of the object produced by additive manufacturing.

The aging may be performed at a temperature in the range of 400-600 °C, preferably for a period of 3 to 8 hours. Aging is preferably conducted in a defined temperature interval and time interval. For example, aging at too high temperatures may lead to a reduced hardness of the aged material because of austenite reversion and/or precipitation coarsening.

The aging may be performed at a temperature in the range of 480-600 °C, preferably for a period of 3 to 5 hours. The aging may increase the hardness of the object to above 520 HV5, such as approximately 540 HV5.

The process may be carried out so that any heat treatment of the built object is performed at a temperature below 650 °C, preferably below 600 °C. This e.g. to decrease the risk of unwanted phase transformations.

The melt may be solidified at a cooling rate of 10⁴-10⁶ K/s. Solidification at a cooling rate of 10⁴-10⁶ K/s may be referred to as a fast solidification. In general, fast solidification of Co free or almost Co free maraging system is expected to lead to the formation with heavy microsegregation of alloying elements to the inter-cellular/dendritic regions as a result of a constitutional undercooling. This commonly leads to the chemical stabilization of retained austenite at the intercellular regions. A large volume fraction of retained austenite necessities the need for a homogenization process treatment. It has surprisingly been realized that a fast cooling of a melt comprising the inventive powder does advantageously form only a small amount of retained austenite, such as below 2 vol.%.

The additive manufacturing may be directed energy deposition or powder bed fusion, such as laser beam powder bed fusion or electron beam powder bed fusion, preferably powder bed fusion, more preferably laser beam powder bed fusion.

A process for producing an object by additive manufacturing not according to the invention as defined in the claims may alternatively comprise building an object by iteratively
- depositing a metal powder as described herein and
- applying a binder to form a bound metal powder,
   and subsequently
- sintering the bound metal powder; and
- aging the built object without any preceding solution annealing. In this process the additive manufacturing may be binder jetting.

### Brief description of drawings

The above objects, as well as additional objects, features, and advantages of the present invention, will be more fully appreciated by reference to the following detailed description of embodiment of the present invention, when taken in conjunction with the accompanying drawing, wherein:
Figs. 1a-c shows light optical microscopy images in different magnification of a cross-sectional view of an as-built sample.
Figs. 2a-b shows two electron backscatter diffraction images of an as-built sample.
Fig. 3a shows a plot of a plurality of hardness measurements of aged and additively manufactured objects comprising the inventive powder.
Fig. 3b shows a plot of a plurality of tensile curves of aged and additively manufactured objects comprising the inventive powder.

### Detailed description

### Manufacturing of a sample powder and additively manufactured sample

A metal powder having elemental composition according to table 1 was prepared by inert gas atomization of an alloy comprising the elements of the table.

**Table 1. Elemental composition of metal powder, wt%**

| | |
|---|---|
| C | 0.04 |
| N | 0.03 |
| O | 0.04 |
| Al | 0.08 |
| Si | 0.4 |
| P | 0.07 |
| S | 0.004 |
| Ti | 0.9 |
| Cr | 3.9 |
| Mn | 0.4 |
| Fe | Balance |
| Co | 0.03 |
| Ni | 9.6 |
| Mo | 4.5 |

Samples were additively manufactured using an EOS M290 L-PBF machine equipped with 400W Yb-fiber laser. Said manufactured samples are referred to as as-built samples.

### Characterisation

A portion of an as-built sample was cut-out so as to provide a cross-sectional view of the as-built sample. The as-built sample was etched with Nital 2 %.

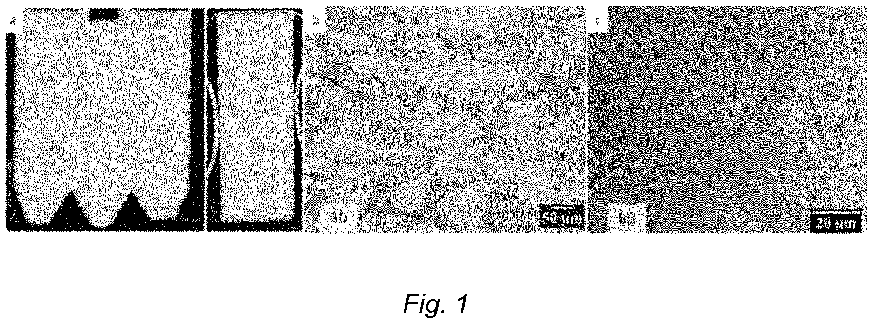

Relative density measurements were carried out using image analysis on light optical microscope (LOM) images of metallographic cross-sections of the as-built sample. Fig. 1a shows a low magnification profile of the cross-section along the build direction (left) and the normal direction (right). Fig. 1b shows traces of melt pools in the chemically etched cross-section. Fig. 1c shows, in high magnification, an ultra-fine cellular/dendritic solidification structure.

The as-built sample showed a relative density of over 99.9 %.

An as-built test object as described above was evaluated using electron back scatter diffraction (EBSD) measurements carried out using a Zeiss Gemini 450 field emission scanning electron SEM microscopy with a very fast Symmetry EBSD camera, to trace the presence and location of retained austenite (RA) in the microstructure of the as-built test sample.

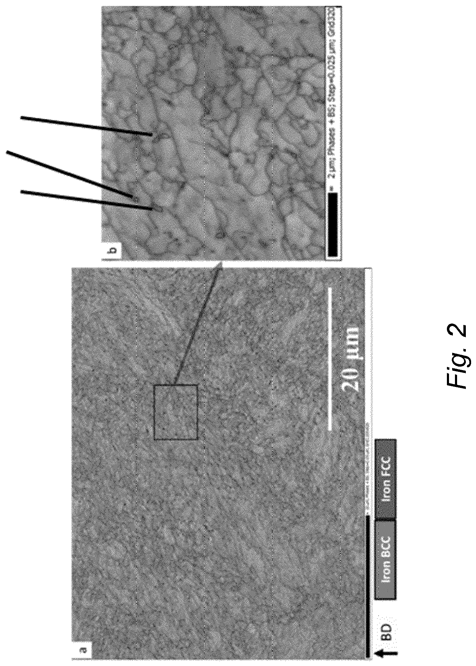

The EBSD analysis results show, what may in this context be considered, a negligible volume fraction of RA in the as-built condition and an essentially martensitic microstructure, see fig. 2a-2b. Higher magnification scans evidenced that RA could only be found at the cellular boundaries as a consequence of heavy microsegregation of alloying elements, in particular at the cells triple conjunctions (Fig. 2b). Three entities of RA are marked with black lines in Fig. 2a.

X-ray diffraction (XRD) analysis was performed using Bruker D8 Discover X-ray diffractometer (Cu-radiation (1.54Å)).

According to XRD analysis, the RA was below 2 vol.% in the as-built material. This provides a suitable condition for direct aging of the essentially martensitic as-built microstructure without the need for prior solution annealing.

### Mechanical properties

A cylindrical part of an as-built sample (described under Manufacturing of a sample powder and additively manufactured sample) was machined to produce small-size 4C20 tensile test samples proportional to the standard specimen, accordingly the tensile tests could be performed conforming to the ASTM E8M standard. One as-built sample was aged (aged sample), in a chamber furnace, at 480°C for 8 hours. A small-size 4C20 tensile test sample proportional to the standard specimen was machined from the aged sample.

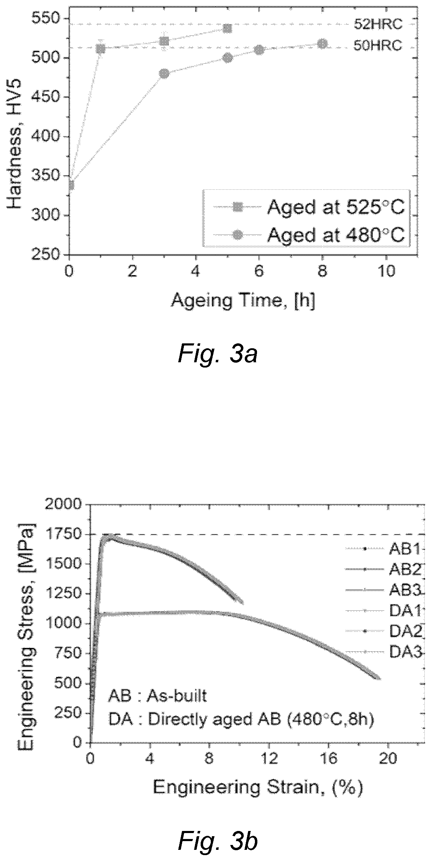

The as-built sample and the aged sample were tested for yield strength, tensile strength, elongation, area reduction, hardness, and impact toughness. The yield and tensile strength increased from ~1075 MPa and -1100 MPa, to -1700 MPa and -1730 MPa, respectively, after age hardening (480°C for 8h), see table 2. Elongation was reduced from -20% to -10% after aging, see table 2. The tensile tests were repeated trice on both the as-built sample (AB1, AB2, AB3) and the aged sample (DA1, DA2, DA3), see figure 3b.

Seven as-built samples (manufactured as described above) were aged, in a chamber furnace, at different temperatures and for different times, see fig. 3. Vickers hardness (HV5) measurements were carried out on carefully ground and polished metallographic cross-sections of the seven samples according to the ASTM E92-82 standard. Direct aging of the prototype alloy from the as-built state (340±10 HV5) led to an increase in hardness as a result of intermetallic precipitation. Given the current aging experiments, the hardness was gradually increased to 520 HV5 by aging at 480°C for 3 h to 8 h. The maximum recorded hardness was achieved by aging at 525°C for 3 h (-540 HV5) (Fig.3a).

Impact toughness was evaluated using Instrumented Charpy V-notch (CVN) tests were carried out according to the ASTM E2298 standard, see table 2.

**Table 2. Summary of hardness and mechanical properties in the as-built and aged conditions**

| | As-built | Aged (480 °C, 8 h) | Aged (480 °C, 3 h) |
|---|---|---|---|
| Yield strength (MPa) | 1075 ± 2 | 1706 ± 6 | - |
| Tensile strength (MPa) | 1093 ± 4 | 1732 ± 11 | - |
| Elongation (%) | 19.3 ± 0.1 | 9.9 ± 0.2 | - |
| Area reduction (%) | 74 ± 1 | 52 ± 1 | - |
| Hardness (HV10) | 340 ± 10 | 520 ± 4 | 475 ± 10 |
| Impact toughness (J) | 190 ± 6 | 14 ± 2 | 38 ± 1 |

## Claims

1. A metal powder for additive manufacturing, comprising, in wt%,
| | |
|---|---|
| Ni | 9.0-12.0, |
| Cr | 2.0-4.5, |
| Mo | 3.5-4.5 and |
| Ti | 0.1-1.0; |
and, if present,
| | |
|---|---|
| Si | up to 0.5, |
| Mn | up to 0.5, |
| Al | up to 0.1, |
| Co | up to 0.1, |
| N | up to 0.05 and/or |
| C | up to 0.07; |
the balance being Fe and usual impurities.

2. The metal powder according to claim 1, wherein
| | |
|---|---|
| when 9.0 ≤ Ni ≤ 10.0: | 7.2 ≤ (Cr + Mo + Ti) ≤ 8.9; |
| when 10.0 < Ni ≤ 11.0: | 6.5 ≤ (Cr + Mo + Ti) ≤ 8.2; |
| when 11.0 < Ni ≤ 12.0: | 5.6 ≤ (Cr + Mo + Ti) ≤ 7.5. |

3. The metal powder according to claim 1 or 2, comprising, in wt%,
| | |
|---|---|
| Ni | 9.0-10.0, |
| Cr | 3.0-3.5, |
| Mo | 4.0-4.5 and |
| Ti | 0.7-0.9; |
and, if present,
| | |
|---|---|
| Si | up to 0.4, |
| Mn | up to 0.4, |
| Al | up to 0.05, |
| Co | up to 0.1, |
| N | up to 0.05 and/or |
| C | up to 0.03; |
the balance being Fe and usual impurities.

4. The metal powder according to anyone of the preceding claims, comprising, in wt%,
| | |
|---|---|
| Ni | 9.0-10.0, |
| Cr | 3.0-3.5, |
| Mo | 4.0-4.5, |
| Ti | 0.7-0.9, |
| Si | 0.2-0.4 and |
| Mn | 0.2-0.4; |
and, if present,
| | |
|---|---|
| Al | up to 0.05, |
| Co | up to 0.1, |
| N | up to 0.05 and/or |
| C | up to 0.03; |
the balance being Fe and usual impurities.

5. The metal powder according to anyone of the preceding claims, wherein the comprised elements are present as an alloy.

6. The metal powder according to anyone of the preceding claims, wherein at least 90 wt% of the powder has a particle size determined by sieving of lower than 500 µm, preferably of lower than 200 µm, more preferably wherein
- at least 90 wt% of the powder has a particle size of lower than 45 µm,
- at most 10 wt% of the powder has a particle size of lower than 15 µm and at least 90 wt% of the powder has a particle size of lower than 53 µm,
- at most 10 wt% of the powder has a particle size of lower than 45 µm and at least 90 wt% of the powder has a particle size of lower than 106 µm, and/or
- at most 10 wt% of the powder has a particle size of lower than 53 µm and at least 90 wt% of the powder has a particle size of lower than 150 µm.

7. Use of a metal powder according to anyone of claims 1 to 6 for additive manufacturing.

8. Use according to claim 7, wherein the additive manufacturing is binder jetting, directed energy deposition or powder bed fusion, such as laser beam powder bed fusion or electron beam powder bed fusion, preferably powder bed fusion, more preferably laser beam powder bed fusion.

9. A process for producing an object by additive manufacturing, comprising building an object by iteratively
- melting particles of a metal powder according to anyone of claims 1 to 8 and
- solidifying the melt,
and subsequently
- aging the built object without any preceding solution annealing thereof.

10. The process according to claim 9, wherein the aging is performed at a temperature in the range of 400-600 °C, preferably for a period of 3 to 8 hours.

11. The process according to claim 10, wherein the aging is performed at a temperature in the range of 480-600 °C, preferably for a period of 3 to 5 hours.

12. The process according to anyone of claims 9 to 11, wherein any heat treatment of the built object is performed at a temperature below 650 °C, preferably below 600 °C.

13. The process according to anyone of claims 9 to 12, wherein the melt is solidified at a cooling rate of 10⁴-10⁶ K/s.

14. The process according to anyone one of claims 9 to 13, wherein the additive manufacturing is directed energy deposition or powder bed fusion, such as laser beam powder bed fusion or electron beam powder bed fusion, preferably powder bed fusion, more preferably laser beam powder bed fusion.

## Patentansprüche

1. Metallpulver für die additive Fertigung, enthaltend in Gew.-%
Ni 9,0-12,0,
Cr 2,0-4,5,
Mo 3,5-4,5 und
Ti 0,1-1,0,
und, falls vorhanden,
Si bis zu 0,5,
Mn bis zu 0,5,
AI bis zu 0,1,
Co bis zu 0,1,
N bis zu 0,05 und/oder
C bis zu 0,07,
wobei der Rest Fe und übliche Verunreinigungen sind.

2. Metallpulver nach Anspruch 1, wobei
wenn 9,0 ≤ Ni ≤ 10,0: 7,2 ≤ (Cr + Mo + Ti) ≤ 8,9,
wenn 10,0 < Ni ≤ 11,0: 6,5 ≤ (Cr + Mo + Ti) ≤ 8,2,
wenn 11,0< Ni ≤ 12,0: 5,6 ≤ (Cr+ Mo+Ti) ≤ 7,5.

3. Metallpulver nach Anspruch 1 oder 2, enthaltend in Gew.-%
Ni 9,0-10,0,
Cr 3,0-3,5,
Mo 4,0-4,5 und
Ti 0,7-0,9,
und, falls vorhanden,
Si bis zu 0,4,
Mn bis zu 0,4,
AI bis zu 0,05,
Co bis zu 0,1,
N bis zu 0,05 und/oder
C bis zu 0,03,
wobei der Rest Fe und übliche Verunreinigungen sind.

4. Metallpulver nach einem der vorangehenden Ansprüche, enthaltend in Gew.-%,
Ni 9,0-10,0,
Cr 3,0-3,5,
Mo 4,0-4,5,
Ti 0,7-0,9,
Si 0,2-0,4 und
Mn 0,2-0,4,
und, falls vorhanden,
AI bis zu 0,05,
Co bis zu 0,1,
N bis zu 0,05 und/oder
C bis zu 0,03,
wobei der Rest Fe und übliche Verunreinigungen sind.

5. Metallpulver nach einem der vorangehenden Ansprüche, wobei die enthaltenen Elemente als Legierung vorliegen.

6. Metallpulver nach einem der vorangehenden Ansprüche, wobei wenigstens 90 Gew.-% des Pulvers eine durch Sieben bestimmte Partikelgröße von weniger als 500 µm, vorzugsweise von weniger als 200 µm, aufweisen, wobei besonders bevorzugt
- wenigstens 90 Gew.-% des Pulvers eine Partikelgröße von weniger als 45 µm aufweisen,
- höchstens 10 Gew.-% des Pulvers eine Partikelgröße von weniger als 15 µm aufweisen und wenigstens 90 Gew.-% des Pulvers eine Partikelgröße von weniger als 53 µm aufweisen,
- höchstens 10 Gew.-% des Pulvers eine Partikelgröße von weniger als 45 µm und wenigstens 90 Gew.-% des Pulvers eine Partikelgröße von weniger als 106 µm aufweisen, und/oder
- höchstens 10 Gew.-% des Pulvers eine Partikelgröße von weniger als 53 µm aufweisen und wenigstens 90 Gew.-% des Pulvers eine Partikelgröße von weniger als 150 µm aufweisen.

7. Verwendung eines Metallpulvers nach einem der Ansprüche 1 bis 6 zur additiven Fertigung.

8. Verwendung nach Anspruch 7, wobei es sich bei der additiven Fertigung um Binder-Jetting, gerichtete Energieabscheidung oder Pulverbettschmelzen, wie beispielsweise Laserstrahl-Pulverbettschmelzen oder Elektronenstrahl-Pulverbettschmelzen, handelt, vorzugsweise um Pulverbettschmelzen, besonders bevorzugt Laserstrahl-Pulverbettschmelzen,.

9. Verfahren zur Herstellung eines Objekts durch additive Fertigung, bei dem man ein Objekt durch iteratives
- Schmelzen von Partikeln eines Metallpulvers nach einem der Ansprüche 1 bis 8 und
- Verfestigen der Schmelze,
und anschließend
- Härten des aufgebauten Objekts ohne vorheriges Lösungsglühen
aufbaut.

10. Verfahren nach Anspruch 9, wobei das Härten bei einer Temperatur im Bereich von 400 bis 600 °C, vorzugsweise über einen Zeitraum von 3 bis 8 Stunden, durchgeführt wird.

11. Verfahren nach Anspruch 10, wobei das Härten bei einer Temperatur im Bereich von 480-600 °C, vorzugsweise über einen Zeitraum von 3 bis 5 Stunden, durchgeführt wird.

12. Verfahren nach einem der Ansprüche 9 bis 11, wobei jede Wärmebehandlung des aufgebauten Objekts bei einer Temperatur unter 650 °C, vorzugsweise unter 600 °C, durchgeführt wird.

13. Verfahren nach einem der Ansprüche 9 bis 12, wobei die Schmelze mit einer Abkühlgeschwindigkeit von 104-106 K/s verfestigt wird.

14. Verfahren nach einem der Ansprüche 9 bis 13, wobei es sich bei der additiven Fertigung um gerichtete Energieabscheidung oder Pulverbettschmelzen handelt, wie z. B. Laserstrahl-Pulverbettschmelzen oder Elektronenstrahl-Pulverbettschmelzen, vorzugsweise Pulverbettschmelzen, besonders bevorzugt Laserstrahl-Pulverbettschmelzen.

## Revendications

1. Poudre métallique pour fabrication additive, comprenant, en % en poids,
| | |
|---|---|
| du Ni | entre 9,0 et 12,0, |
| du Cr | entre 2,0 et 4,5, |
| du Mo | entre 3,5 et 4,5 et |
| du Ti | entre 0,1 et 1,0 ; |
et, si présents,
| | |
|---|---|
| du Si | jusqu'à 0,5, |
| du Mn | jusqu'à 0,5, |
| de l'Al | jusqu'à 0,1, |
| du Co | jusqu'à 0,1, |
| du N | jusqu'à 0,05 et/ou |
| du C | jusqu'à 0,07 ; |
le reste étant du Fe et des impuretés usuelles.

2. Poudre métallique selon la revendication 1, où
| | |
|---|---|
| lorsque 9,0 ≤ Ni ≤ 10,0 : | 7,2 ≤ (Cr + Mo + Ti) ≤ 8,9 ; |
| lorsque 10,0 < Ni ≤ 11,0 : | 6,5 ≤ (Cr + Mo + Ti) ≤ 8,2 ; |
| lorsque 11,0 < Ni ≤ 12,0 : | 5,6 ≤ (Cr + Mo + Ti) ≤ 7,5. |

3. Poudre métallique selon la revendication 1 ou 2, comprenant, en % en poids,
| | |
|---|---|
| du Ni | entre 9,0 et 10,0, |
| du Cr | entre 3,0 et 3,5, |
| du Mo | entre 4,0 et 4,5 et |
| du Ti | entre 0,7 et 0,9 ; |
et, si présents,
| | |
|---|---|
| du Si | jusqu'à 0,4, |
| du Mn | jusqu'à 0,4, |
| de l'Al | jusqu'à 0,05, |
| du Co | jusqu'à 0,1, |
| du N | jusqu'à 0,05 et/ou |
| du C | jusqu'à 0,03 ; |
le reste étant du Fe et des impuretés usuelles.

4. Poudre métallique selon l'une quelconque des revendications précédentes, comprenant, en % en poids,
| | |
|---|---|
| du Ni | entre 9,0 et 10,0, |
| du Cr | entre 3,0 et 3,5, |
| du Mo | entre 4,0 et 4,5, |
| du Ti | entre 0,7 et 0,9, |
| du Si | entre 0,2 et 0,4 et |
| du Mn | entre 0,2 et 0,4 ; |
et, si présents,
| | |
|---|---|
| de l'Al | jusqu'à 0,05, |
| du Co | jusqu'à 0,1, |
| du N | jusqu'à 0,05 et/ou |
| du C | jusqu'à 0,03 ; |
le reste étant du Fe et des impuretés usuelles.

5. Poudre métallique selon l'une quelconque des revendications précédentes, où les éléments compris sont présents sous forme d'alliage.

6. Poudre métallique selon l'une quelconque des revendications précédentes, où au moins 90 % en poids de la poudre présente une taille de particules déterminée par tamisage de moins de 500 µm, de préférence de moins de 200 µm, de façon davantage préférée où
- au moins 90 % en poids de la poudre présente une taille de particules de moins de 45 µm,
- au plus 10 % en poids de la poudre présente une taille de particules de moins de 15 µm et au moins 90 % en poids de la poudre présente une taille de particules de moins de 53 µm,
- au plus 10 % en poids de la poudre présente une taille de particules de moins de 45 µm et au moins 90 % en poids de la poudre présente une taille de particules de moins de 106 µm, et/ou
- au plus 10 % en poids de la poudre présente une taille de particules de moins de 53 µm et au moins 90 % en poids de la poudre présente une taille de particules de moins de 150 µm.

7. Utilisation d'une poudre métallique selon l'une quelconque des revendications 1 à 6 à des fins de fabrication additive.

8. Utilisation selon la revendication 7, où la fabrication additive est une projection de liant, un dépôt de matière sous énergie concentrée ou une fusion sur lit de poudre, telle qu'une fusion sur lit de poudre par faisceau laser ou une fusion sur lit de poudre par faisceau d'électrons, de préférence une fusion sur lit de poudre, de façon davantage préférée une fusion sur lit de poudre par faisceau laser.

9. Procédé de production d'un objet par fabrication additive, comprenant le fait de construire un objet en réalisant de manière itérative les étapes consistant à :
- faire fondre des particules d'une poudre métallique selon l'une quelconque des revendications 1 à 8 et
- solidifier le bain de fusion,
et ensuite
- faire vieillir l'objet construit sans aucune hypertrempe précédente de celui-ci.

10. Procédé selon la revendication 9, dans lequel le vieillissement est réalisé à une température comprise dans la plage allant de 400 à 600 °C, de préférence sur une durée de 3 à 8 heures.

11. Procédé selon la revendication 10, dans lequel le vieillissement est réalisé à une température comprise dans la plage allant de 480 à 600 °C, de préférence sur une durée de 3 à 5 heures.

12. Procédé selon l'une quelconque des revendications 9 à 11, dans lequel tout traitement thermique de l'objet construit est réalisé à une température inférieure à 650 °C, de préférence inférieure à 600 °C.

13. Procédé selon l'une quelconque des revendications 9 à 12, dans lequel le bain de fusion est solidifié à une vitesse de refroidissement allant de 10⁴ à 10⁶ K/s.

14. Procédé selon l'une quelconque des revendications 9 à 13, dans lequel la fabrication additive est un dépôt de matière sous énergie concentrée ou une fusion sur lit de poudre, telle qu'une fusion sur lit de poudre par faisceau laser ou une fusion sur lit de poudre par faisceau d'électrons, de préférence une fusion sur lit de poudre, de façon davantage préférée une fusion sur lit de poudre par faisceau laser.
